# EUROPÄISCHE PATENTSCHRIFT

(11) **EP 1 602 909 B1**
(45) Veröffentlichungstag und Bekanntmachung des Hinweises auf die Patenterteilung: **26.08.2009**
(21) Anmeldenummer: 04013199.7
(22) Anmeldetag: 04.06.2004
(51) Int. Cl.: F04D 13/08, G01N 19/10, G01N 7/04, G01M 3/04

(54) **Eintauchbarer Elektromotor mit Flüssigkeitsvorlage und Anzeigeelement eines Fremdstoffes darin.**
Submersible electrical motor with liquid seal and display element for foreign matter therein.
Moteur électrique submersible avec soupape liquide et élément d'affichage d'une matière étrangère dans celle-ci.

(43) Veröffentlichungstag der Anmeldung: 07.12.2005
(73) Patentinhaber: GRUNDFOS A/S, 8850 Bjerringbro (DK)
(72) Erfinder: Thorup, Nils, 8600 Silkeborg (DK); Grann, Helge, 8850 Bjerringbro (DK)
(74) Vertreter: Hemmer, Arnd

(56) Entgegenhaltungen:
- DE-A- 19 707 840
- DE-U- 29 622 406
- US-A- 5 095 844
- US-A- 5 146 778
- US-A- 5 482 678
- US-A- 5 694 806
- PATENT ABSTRACTS OF JAPAN Bd. 0080, Nr. 75 (P-266), 7. April 1984 (1984-04-07) & JP 58 221142 A (KUBOTA TEKKO KK; others: 02), 22. Dezember 1983 (1983-12-22)

## Beschreibung

Die Erfindung betrifft einen in ein Fluid eintauchbaren Elektromotor mit einer Flüssigkeitsvorlage.

Bei Ölvorlagen in Pumpen, welche zwischen der Pumpe und einem trocken laufenden Elektromotor angeordnet sind und wie sie z.B. aus US 6,379,127 bekannt sind, ist es wünschenswert, rechtzeitig zu erkennen, wenn Wasser in das Öl eingedrungen ist, um dann Dichtungen ersetzen zu können, bevor es zu einer Beschädigung des Elektromotors in der Pumpe kommt.

Beispielsweise aus US 5,095,844 ist ein Anzeigeelement bekannt, welches bei Kontakt mit Wasser seine Farbe ändert und so signalisiert, dass Wasser in das Öl eingedrungen ist. Ein solches Anzeigeelement kann jedoch lediglich eine bestimmte Wasserkonzentration in dem Öl anzeigen. Wenn die Anzeige in diesem Zeitpunkt nicht abgelesen oder überprüft wird, kann ein zu hoher Wasseranteil in dem Öl möglicherweise nicht rechtzeitig erkannt werden.

Es ist daher Aufgabe der Erfindung einen verbesserten eintauchbaren Elektromotor zu schaffen, bei welchen ein Fremdstoff in der Flüssigkeitsvorlage rechtzeitig erkannt werden kann.

Diese Aufgabe wird durch einen eintauchbaren Elektromotor gemäß Anspruch 1 gelöst. Bevorzugte Ausführungsformen ergeben sich aus den Unteransprüchen.

Der erfindungsgemäße eintauchbare Elektromotor weist eine Flüssigkeitsvorlage mit einem darin angeordneten Anzeigeelement auf, Das Anzeigeelement dient zur Erfassung eines Fremdstoffes in der Flüssigkeitsvorlage, - beispielsweise zur Erfassung von Wasser in Öl. Das Anzeigeelement weist ein Medium auf, welches so ausgebildet ist, dass es den Fremdstoff aufnehmen kann. Vorzugsweise ist das Medium so ausgebildet, dass es anziehend für den Fremdstoff ist und den Fremdstoff aufsaugt. Dies bietet zunächst den Vorteil, dass dabei der Fremdstoff dem Fluid der Flüssigkeitsvorlage entzogen wird und somit die Konzentration des Fremdstoffes in dem Fluid gering gehalten wird. Das Medium ist ferner so ausgebildet, dass es durch Aufnahme des Fremdstoffes sein Volumen ändert, beispielsweise durch Aufnahme des Fremdstoffes aufquillt. Zusätzlich ist ein Indikatorelement vorgesehen, welches mit dem Medium derart zusammenwirkt, dass die Volumenänderung des Mediums das Indikatorelement in seiner Position verlagert. Beispielsweise kann das aufquellende Medium derart auf das Indikatorelement drücken, dass es in seiner Position verschoben wird. Je nach Anordnung kann das Medium jedoch auch eine Zugkraft auf das Indikatorelement ausüben.

Das Indikatorelement kann ein separates Bauteil sein, welches von dem sich im Volumen ändernden Medium bewegt bzw. verlagert wird. So ist es möglich die Volumenänderung des Mediums mechanisch auf ein Anzeigeelement, beispielsweise einen Zeiger zu übertragen. Alternativ kann das Indikatorelement beispielsweise auch als einfache Markierung an dem Medium selber ausgebildet sein, welche sich bei Volumenänderung des Mediums verlagert, Das Indikatorelement kann auch durch das Medium selbst gebildet sein, beispielsweise in Form einer Materialfront, die sich durch den Expansionsprozess bildet und die an einem Kontrollfenster sichtbar oder durch Messaufnehmer erfasst wird.

Aus der Positionsverlagerung des Indikatorelements kann auf die Menge des von dem Medium aufgenommenen Fremdstoffes geschlossen werden. Daraus wiederum kann darauf geschlossen werden, wie viel Fremdstoff in das Medium, beispielsweise wie viel Wasser in Öl eingedrungen ist. Bei einer bestimmten Position des Indikatorelementes, das heißt bei einem bestimmten Quell- oder Schrumpfungsgrad des Mediums kann dann beispielsweise eine Anlage, in die das Anzeigeelement integriert ist, außer Betrieb genommen werden, um erforderliche Wartungsarbeiten durchzuführen. Wenn das Medium durch den aufzunehmenden Fremdstoff gesättigt ist, wenn kein weiterer Fremdstoff aufgenommen werden kann, ist ein Grenzwert erreicht. Beispielsweise kann dieser Grenzwert durch eine bestimmte Position des Indikatorelementes angezeigt werden, um die Anlage dann außer Betrieb zu nehmen. Vorteilhafter Weise wird bis zu diesem Punkt der Fremdstoff großteils oder im Wesentlichen vollständig von dem Medium aufgenommen, sodass die Flüssigkeitsvorlage bis zu diesem Zeitpunkt im Wesentlichen frei von dem Fremdstoff gehalten wird.

Neben der Erfassung eines bestimmten Grenzwertes, beispielsweise eines Sättigungswertes des Mediums ist es bei entsprechender Ausgestaltung des Anzeigeelementes auch möglich die Volumenänderung des Mediums und damit die Menge des aufgenommenen Fremdstoffes kontinuierlich zu erfassen, so dass frühzeitig erkannt werden kann, welche Menge des Fremdstoffes in die Flüssigkeitsvorlage eindringt.

Eine bevorzugte Verwendung des Anzeigeelementes in der Flüssigkeitsvorlage eines eintauchbaren Elektromotors ist z. B. in einem Antrieb einer Pumpe. Bei Pumpen ist es häufig erforderlich, einen trockenen Elektromotor gegenüber dem umgebenden bzw. zu fördernden Fluid abzudichten. Hierzu wird häufig eine Flüssigkeitsvorlage verwendet. Beispielsweise bei Wasser und insbesondere bei Abwasserpumpen werden trocken laufende Motoren eingesetzt. Dem Motor vorgelagert ist eine Flüssigkeitsvorlage, beispielsweise eine Ölvorlage, welche gegenüber dem Motor durch eine erste Dichtung und gegenüber dem umgebenden Fluid bzw. Wasser durch eine zweite Dichtung abgedichtet ist. Auf diese Weise wird verhindert, dass durch Leckagen der Dichtungen Wasser direkt in den Elektromotor eindringen kann und diesen beschädigt. Wenn nun die Dichtung zwischen umgebenden Fluid und Flüssigkeitsvorlage undicht ist, dringt das umgebende Fluid in die Flüssigkeitsvorlage ein. Um zu verhindern, dass das umgebende Fluid aus der Flüssigkeitsvorlage dann in den Elektromotor eindringt bzw. das die Dichtung zwischen Flüssigkeitsvorlage und Elektromotor durch schlechtere Schmierung beschädigt wird, ist es wichtig, das Eindringen des Fluids rechtzeitig zu erfassen. Dies kann durch das erfindungsgemäße Anzeigeelement erfolgen, Beispielsweise kann bei Verwendung von Öl als Flüssigkeitsvorlage eindringendes Wasser durch das oben beschriebene Anzeigeelement erfasst werden. Besonders vorteilhaft bei dem erfindungsgemäßen Anzeigeelement ist, dass das in die Flüssigkeitsvorlage eindringende Fluid aus der Umgebung nicht nur angezeigt sondern gleichzeitig durch das Medium aufgenommen und so der Flüssigkeitsvorlage entzogen wird, Auf diese Weise kann auch bei Eindringen von Fluid bzw. Wasser aus der Umgebung in die Flüssigkeitsvorlage die Qualität der Flüssigkeit, beispielsweise des Öls, in der Flüssigkeitsvorlage über einen längeren Zeitraum aufrechterhalten werden. Auf diese Weise können Beschädigungen durch eindringendes Fluid oder Wasser über einen längeren Zeitraum sicher verhindert werden, sodass insgesamt eine größere Betriebssicherheit erreicht werden kann. Dies kann auch eine Verlängerung von Wartungsintervallen ermöglichen.

Zweckmäßiger Weise ist das Medium so ausgebildet, dass es die Flüssigkeitsvorlage nicht aufnimmt und/oder von einer Membran umgeben ist, welche für den Fremdstoff durchlässig und undurchlässig für die Flüssigkeitsvorlage ist. So wird sichergestellt, dass es nicht zu einer Volumenänderung des Mediums durch Aufnahme der Flüssigkeitsvorlage selber kommen kann. Vorzugsweise wird nur der zu erfassende Fremdstoff von dem Medium aufgenommen und ist die das Medium umgebende Membran nur für den Fremdstoff durchlässig ausgebildet.

Bevorzugt weist das Anzeigeelement ein Gehäuse auf, das zumindest bereichsweise für den zu erfassenden Fremdstoff durchlässig ausgebildet ist, wobei das den Fremdstoff aufnehmende Medium im Inneren des Gehäuses angeordnet ist. Das Medium ist somit vorzugsweise von dem Gehäuse eingeschlossen. Dies ermöglicht eine Anordnung des Mediums in gewünschter Position. Ferner kann das Medium mit dem Gehäuse gut transportiert und gehandhabt werden. Die teilweise Durchlässigkeit des Gehäuses für den Fremdstoff kann beispielsweise durch ein poröses Gehäuse erreicht werden. Dabei können die Poren vorzugsweise so ausgebildet sein, dass sie nur den Fremdstoff durchlassen und die Flüssigkeitsvorlage zurückhalten, sodass das Gehäuse selber als Membran wirkt. Alternativ kann das Gehäuse auch größere Poren oder Öffnungen aufweisen, durch die der Fremdstoff und gegebenenfalls auch das Fluid in das Innere des Gehäuses eindringen können. Öffnungen in dem Gehäuse sind jedoch zweckmäßiger Weise so dimensioniert, dass sie das Medium im Inneren des Gehäuses zurückhalten können.

Weiter bevorzugt ist das Medium von dem Gehäuse so umschlossen, dass es sich nur in definierter Richtung ausdehnen kann. Durch eine solche Anordnung wird verhindert, dass das Medium beispielsweise in allen Raumrichtungen aufquellen kann. Dies soll beispielsweise dann verhindert werden, wenn das Gehäuse mit dem Medium durch eine Öffnung definierter Größe in eine Anlage oder Maschine eingesetzt werden muss. Würde das Medium in alle Raumrichtungen aufquellen, wäre es dann möglicherweise nicht mehr möglich, dass aufgequollene Medium aus der Anlage zu entnehmen. Durch Begrenzung der Ausdehnung des Mediums in bestimmten Raumrichtungen durch das umgebende Gehäuse kann dann beispielsweise sichergestellt werden, dass das Gehäuse mit dem Medium auch nach Aufnahme des Fremdstoffes noch durch eine Öffnung, beispielsweise eine Bohrung, aus einer Anlage entnommen werden kann. Vorzugsweise erzeugt das Medium in der definierten Richtung eine Kraft zur Verlagerung des Indikatorelementes. Wenn das Medium in der definierten Richtung quillt oder schrumpft, kann es eine Druck- oder Zugkraft auf das Indikatorelement ausüben, sodass dieses seine Position in definierter Richtung verlagert. Beispielsweise kann die erzeugte Druck- oder Zugkraft auch auf ein Zeigerelement oder Ähnliches wirken. Besonders bevorzugt ist das Indikatorelement in der definierten Richtung beweglich geführt. Auf diese Weise wird sichergestellt, dass das Indikatorelement durch die Volumenänderung des Mediums in definierter Richtung verlagert wird. Auf diese Weise kann ein bestimmter Grad der Aufnahme des Fremdstoffes durch das Medium an definierter Position des Indikatorelementes abgelesen werden.

Besonders bevorzugt ist das Gehäuse rohrförmig und mit einer geschlossenen Stirnseite ausgebildet. Ein solches Gehäuse kann gut durch eine Bohrung in einen Maschinenbereich, beispielsweise in einen Schmiermittelbehälter eingesetzt werden.

Bevorzugt ist das Medium ferner so im Inneren des Gehäuses, insbesondere im Inneren eines rohrförmigen Gehäuses angeordnet, dass es sich lediglich in Längsrichtung des Gehäuses ausdehnen kann. Dies kann beispielsweise bei einem rohrförmigen Gehäuse erreicht werden, dessen eine Stirnseite geschlossen ist. Wenn ein solches Gehäuse starre Wandungen aufweist, kann sich das Medium nur noch in der der geschlossenen Stirnseite abgewandten Richtung ausdehnen oder zusammenziehen. Da die Volumenänderung des Mediums somit auf eine Raumrichtung beschränkt wird, wird sie in dieser Richtung besonders groß, sodass eine besonders deutliche und/oder genaue Anzeige der Volumenänderung durch das Indikatorelement möglich wird.

Vorzugsweise ist in dem Gehäuse, besonders bevorzugt an einer Stirnseite, ein Fenster angeordnet, durch welches ein im Inneren des Gehäuses angeordnetes Indikatorelement sichtbar ist. Durch das Fenster kann die Positionsverlagerung des Indikatorelementes beobachtet werden, um den Volumenänderungsgrad des Mediums und damit den Sättigungsgrad mit aufgenommenem Fremdstoff ablesen zu können. Wenn das Fenster in der Stirnseite angeordnet ist, kann das Indikatorelement beispielsweise in einem rohrförmigen Gehäuse durch die Volumenänderung des Mediums zu dem Fenster hin oder von diesem weg bewegt werden. Besonders bevorzugt wird das Indikatorelement durch Aufquellen des Mediums bei Aufnahme des Fremdstoffes zu dem Fenster hin bewegt, sodass es sichtbar wird, wenn es direkt hinter dem Fenster zu liegen kommt.

Das Fenster kann gemäß einer bevorzugten Ausführungsform der Erfindung so angeordnet sein, dass das Indikatorelement in einer ersten Position durch das Fenster nicht sichtbar und in einer zweiten verlagerten Position durch das Fenster sichtbar ist. Eine solche Anordnung ermöglicht ein einfaches Ablesen des Anzeigeelementes. Beispielsweise kann das Anzeigeelement so eingesetzt werden, dass das Indikatorelement in dem Fenster erst sichtbar wird, wenn ein Zustand erreicht ist, in dem bestimmte Wartungsarbeiten oder ein Abschalten der Anlage erforderlich wird. Solange das Indikatorelement in dem Fenster nicht sichtbar ist, zeigt das Anzeigeelement dann beispielsweise einen ordnungsgemäßen Betriebszustand an.

Gemäß einer weiteren Ausführungsform der Erfindung kann beispielsweise eine Markierung oder Skala vorgesehen sein, an welcher zumindest eine bestimmte Position des Indikatorelementes ablesbar ist. Beispielsweise kann eine Position für das Indikatorelement markiert sein, bei deren Erreichen die zu überwachende Anlage außer Betrieb genommen oder gewartet werden muss. Ferner kann eine Skala vorgesehen werden, durch welche die Verlagerung des Indikatorelementes kontinuierlich überwacht und so insbesondere der Grad der Fremdstoffaufnahme durch das Medium abgelesen werden kann. Eine solche Markierung kann beispielsweise durch Striche auf einem Fenster, durch welches das Indikatorelement zu beobachten ist, geschaffen werden.

Besonders bevorzugt ist das Medium Wasser aufnehmend ausgebildet und ändert sein Volumen durch Wasseraufnahme. Bei dieser Ausgestaltung ist das Anzeigeelement geeignet, Wasser aus der Flüssigkeitsvorlage aufzunehmen und somit bis zum Sättigungsgrad des Mediums die Flüssigkeitsvorlage vorzugsweise im Wesentlichen wasserfrei zu halten. Ferner kann durch die Volumenänderung und damit verbundene Positionsänderung des Indikatorelementes angezeigt werden, dass Wasser in die Flüssigkeitsvorlage eingedrungen ist. Wenn ein Wasser aufnehmendes und Öl abweisendes Medium verwendet wird, ist das Anzeigeelement geeignet, eingedrungenes Wasser in einem Ölbehälter oder Ölkreislauf anzuzeigen. Die Öl abweisende Ausgestaltung des Mediums kann dadurch erreicht werden, dass das Medium selber kein Öl aufnimmt oder von einer Membran umgeben ist, welche lediglich den aufzunehmenden Fremdstoff, vorzugsweise Wasser, nicht aber Öl durchlässt.

Gemäß einer weiteren bevorzugten Ausführungsform ist ein elektrisches Sensorelement zu Erfassung zumindest einer Position des Indikatorelements vorgesehen. Ein solches Sensorelement ermöglicht eine erfasste Position des Indikatorelements elektrisch zu übertragen, sodass eine Maschinensteuerung beispielsweise direkt einen in die Flüssigkeitsvorlage eingedrungenen Fremdstoff oder eine bestimmte Menge von eingedrungenem Fremdstoff erfassen kann und gegebenenfalls eine Maschine rechtzeitig abschalten kann. Ein solches Sensorelement kann beispielsweise induktiv, kapazitiv oder als Kontakt bzw. Schalter ausgebildet sein. Zum Beispiel kann das Indikatorelement auch ein Magnetelement aufweisen und als Sensorelement kann ein Reed-Schalter vorgesehen werden. Es können alle Arten geeigneter elektrischer oder elektronischer Sensorelemente eingesetzt werden, welche eine Position des Indikatorelementes erfassen können.

Das Medium, welches in dem Anzeigeelement zur Fremdstoffaufnahme verwendet wird, ist besonders bevorzugt ein Flüssigkeit aufnehmendes, insbesondere ein Wasser aufnehmendes Polymer. Derartige Polymere sind am Markt verfügbar. Wichtig für die Erfindung ist lediglich, dass das Polymer bei Flüssigkeitsaufnahme möglichst eine besonders große Volumenänderung erfährt. Solche Polymere sind beispielsweise Polyacrylamid oder Polyacrylate, insbesondere sind granulatartige Stoffe mit Korngrößen von 0,1 bis 5 mm besonders geeignet. Als Membranwerkstoff kann zum Beispiel ein gesinterter Kunststoff aus Polypropylen oder Polyethylen verwendet werden.

Gemäß einer weiter bevorzugten Ausführungsform ist das Anzeigeelement als austauschbare Patrone ausgebildet. Dies ermöglicht, das Anzeigeelement, wenn das Medium mit dem aufgenommenen Fremdstoff gesättigt ist, leicht auszutauschen. Eine Solche Patrone kann beispielsweise durch eine Öffnung oder Bohrung in ein Maschinengehäuse eingeschoben oder geschraubt werden.

Bei speziellen Ausgestaltungen des Anzeigeelementes kann das Medium zumindest teilweise außerhalb der Flüssigkeitsvorlage, in welchem der Fremdstoff aufgenommen werden soll, angeordnet werden. Bei einer solchen Anordnung kann das Medium beispielsweise nur in einem Teilbereich oder mit einer Teilfläche in Kontakt mit der Flüssigkeitsvorlage sein. Über eine Sogwirkung wird der aufgenommene Fremdstoff dann in dem gesamten Medium verteilt. Eine solche Anordnung kann bei begrenzten Platzverhältnissen zweckmäßig sein, wenn das Anzeigeelement und insbesondere das Medium nicht vollständig in das Fluid eingetaucht werden, kann.

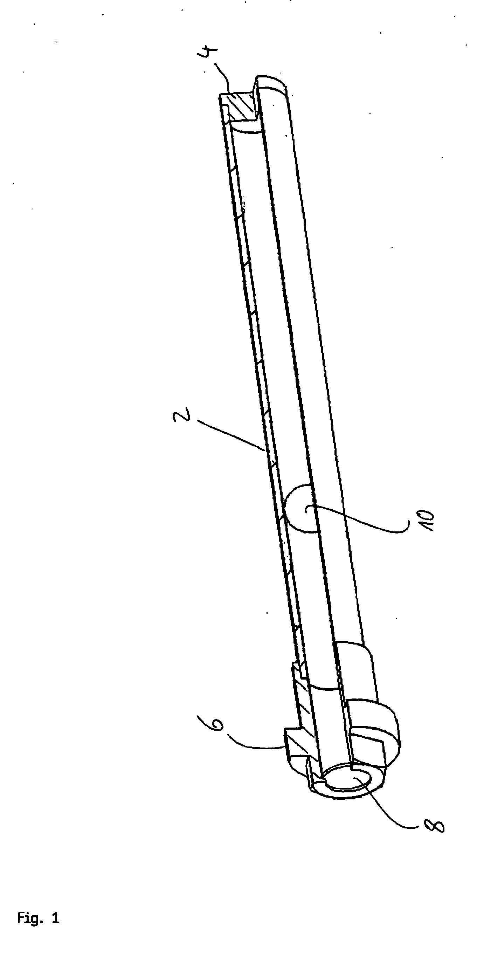

Nachfolgend wird die vorliegende Erfindung beispielhaft anhand der beigefügten Figur beschrieben. Dies zeigt ein bevorzugtes Beispiel des Anzeigeelementes welches in der Flüssigkeitsvorlage des Elektromotors zum Einsatz kommt, in einer teilweise geschnittenen Ansicht.

Das in der Figur gezeigte Anzeigeelement weist ein rohrförmiges Gehäuse auf, welches an seiner ersten Stirnseite durch eine eingesetzte Stirnwand 4 verschlossen ist. An der entgegengesetzten Stirnseite ist ein Gehäusekopf 6 an das Gehäuse 2 angesetzt. Der Gehäusekopf 6 dient dazu, das Anzeigeelement in einer Bohrung eines Pumpen- oder Maschinengehäuses dichtend zu fixieren. Dies kann beispielsweise durch ein Gewinde am Außenumfang des Gehäusekopfes 6 erfolgen. Die der Stirnwand 4 entgegengesetzte Stirnseite des Gehäusekopfes 6 ist durch ein Sichtfenster 8 verschlossen. Im Inneren des Gehäuses 2 ist eine Kugel 10 angeordnet, welche in Längsrichtung des Gehäuses 2 beweglich im Inneren des Gehäuses 2 geführt ist.

Das Gehäuse 2 ist porös ausgebildet, sodass Wasser in das Innere des Gehäuses 2 eindringen kann. Zwischen der Stirnwand 4 und der Kugel 10 wird ein Wasser aufnehmendes Polymer angeordnet, welches bei Wasseraufnahme quillt. Wenn nun Wasser in das Gehäuse 2 eindringt, welches von dem Polymer aufgenommen wird, quillt dieses Polymer auf. Da das Gehäuse 2 starr ausgebildet ist, kann sich das Volumen des Polymers nur in Längsrichtung des Gehäuses 2 vergrößern. Dadurch wird die Kugel 10 in Richtung des Sichtfensters 8 verschoben. Wenn nun die Kugel 10 in die Nähe des Sichtfensters 8 gelangt oder direkt hinter diesem zu liegen kommt, ist dies von außen durch das Sichtfenster 8 erkennbar. Auf diese Weise ist durch das Sichtfenster 8 erkennbar, wenn das Medium im Inneren des Gehäuses 2 soviel Wasser aufgenommen hat, dass es sich nicht weiter ausdehnen kann oder gesättigt ist. Dies ist dann der Zeitpunkt, zu dem das Anzeigeelement ausgetauscht werden muss und gegebenenfalls Dichtungen der zu überwachenden Anlage, beispielsweise einer Ölvorlage einer Pumpe zu ersetzen sind.

Das Gehäuse 2 ist so ausgebildet, dass lediglich Wasser in das Innere des Gehäuses eindringen kann und das Öl, in welches das Gehäuse 2 eingetaucht ist außerhalb des Gehäuses gehalten wird. Alternativ ist es möglich, das Gehäuse nur in dem Bereich, in welchem das Medium vor der Wasseraufnahme angeordnet ist, porös auszubilden. So können Poren oder Öffnungen beispielsweise nur in Nähe der Stirnwand 4 angeordnet sein. Auf diese Weise wird dann verhindert, dass das umgebende Öl in den Raum zwischen der Kugel 10 und dem Sichtfenster 8 eindringt.

Das in der Figur gezeigte Anzeigeelement bildet eine austauschbare Patrone, welche durch eine Öffnung in eine Ölkammer derart eingesetzt wird, dass der Gehäusekopf 6 dichtend an der Wandung der Ölkammer anliegt und das Gehäuse 2 in das Öl eintaucht.

Auch wenn im gezeigten Beispiel die Funktion des Anzeigeelementes anhand einer Anzeige von Wasser in Öl beschrieben wurde, kann das erfindungsgemäße Prinzip des Anzeigeelementes auch bei anderen Flüssigkeitsvorlagen aus diesen aufzunehmenden Fremdstoffen verwendet werden.

### Bezugszeichenliste

- 2: Gehäuse
- 4: Stirnwand
- 6: Gehäusekopf
- 8: Sichtfenster
- 10: Kugel

## Patentansprüche

1. In ein Fluid eintauchbarer Elektromotor mit Flüssigkeitsvorlage, welche gegenüber dem Elektromotor durch eine erste Dichtung und gegenüber dem umgebenden Fluid durch eine zweite Dichtung abgedichtet ist, **dadurch gekennzeichnet, dass** ein Anzeigeelement zur Anzeige eines Fremdstoffes in der Flüssigkeitsvorlage vorgesehen ist mit einem den Fremdstoff aufnehmenden Medium, welches so ausgebildet ist, dass es durch Aufnahme des Fremdstoffes sein Volumen ändert, und einem Indikatorelement (10), welches durch die Volumenänderung des Mediums in seiner Position verlagert wird.

2. Elektromotor nach Anspruch 1, **dadurch gekennzeichnet, dass** das Medium so ausgebildet ist, dass es die Flüssigkeitsvorlage nicht aufnimmt und/oder von einer Membran umgeben ist, welche für den Fremdstoff durchlässig und undurchlässig für die Flüssigkeitsvorlage ist.

3. Elektromotor nach Anspruch 1 oder 2, **dadurch gekennzeichnet, dass** das Anzeigeelement ein Gehäuse (2) aufweist, das zumindest bereichsweise für den zu erfassenden Fremdstoff durchlässig ausgebildet ist, wobei das den Fremdstoff aufnehmende Medium im Inneren des Gehäuses (2) angeordnet ist.

4. Elektromotor nach einem der vorangehenden Ansprüche, **dadurch gekennzeichnet, dass** das Medium so von dem Gehäuse (2) umschlossen ist, dass es sich nur in definierter Richtung ausdehnen kann.

5. Elektromotor nach Anspruch 4, **dadurch gekennzeichnet, dass** das Medium in der definierten Richtung eine Kraft zur Verlagerung des Indikatorelementes (10) erzeugt.

6. Elektromotor nach Anspruch 4 oder 5, **dadurch gekennzeichnet, dass** das Indikatorelement (10) in der definierten Richtung beweglich geführt ist.

7. Elektromotor nach einem der Ansprüche 3 bis 6, **dadurch gekennzeichnet, dass** das Gehäuse (2) rohrförmige und insbesondere mit einer geschlossenen Stirnseite (4) ausgebildet ist.

8. Elektromotor nach Anspruch 7, **dadurch gekennzeichnet, dass** das Medium so im Inneren des Gehäuses (2) angeordnet ist, dass es sich lediglich in Längsrichtung des Gehäuses (2) ausdehnen kann.

9. Elektromotor noch einem der Ansprüche 3 bis 8, **dadurch gekennzeichnet, dass** in dem Gehäuse (2), vorzugsweise an einer stirnselte, ein Fenster (8) angeordnet ist, durch welches ein im inneren des Gehäuse (2) angeordnetes Indikatorelement (10) Sichtbar ist.

10. Elektromotor nach Anspruch 9, **dadurch gekennezeichnet, dass** das Fenster (8) derart angeordnet ist, dass das Indikatorelement (10) in einer ersten Position durch das Fenster (8) nicht sichtbar und in einer zweiten verlagerten Position durch das Fenster (8) sichtbar ist.

11. Elektromotor nach einem der vorangehenden Ansprüche, **dadurch gekennzeichnet, dass** eine Markierung oder Skala vorgeshen ist, an welcher zumindest eine bestimmte Position des indikatorelementes (10) eindeutig ablesbar ist,

12. Elektromotor nach einem der vorangehenden Ansprüche, **dadurch gekennzeichnet, dass** das Medium wasseraufnehmend ausgebildet ist und sein Volumen durch Wasseraufnahme ändert.

13. Elektromotor nach Anspruch 12, **dadurch gekennzeichnet dass** das Medium ölabweisend ist.

14. Elektromotor nach einem der vorangehenden Ansprüche **dadurch gekennzeichnet, dass** ein elektrisches Sensorelement zur Erfassung zumindest einer Position des Indikatorelementes (10) vorgesehen ist.

15. Elektromotor nach einem der vorangehenden Ansprüche, **dadurch gekennzeichnet, dass** das Medium ein flüssigkeitsaufnehmendes Polymer ist.

16. Elektromotor nach einem der vorangehenden Ansprüche, **dadurch gekennzeichnet, dass** das Anzeigeelement als austauschbare Patrone ausgebildet ist.

17. Elektromotor nach einem der vorangehenden Ansprüche **dadurch gekennzeichnet, dass** das Medium zumindest teilweise außerhalb der Flüssigkeitsvorlage angeordnet ist.

## Claims

1. An electric motor which may be immersed into a fluid, with a fluid reserve which is sealed with respect to the electric motor by way of a first seal, and with respect to the surrounding fluid by way of a second seal, **characterised in that** a display element for displaying foreign matter in the fluid reserve is provided, with a medium absorbing the foreign matter, which is designed such that it changes its volume due to the absorption of the foreign matter, and with an indicator element (10), which is displaced in its position by way of the volume change of the medium.

2. An electric motor according to claim 1, **characterised in that** the medium is designed such that it does not absorb the fluid reserve and/or is surrounded by a membrane which is permeable to the foreign matter and impermeable for the fluid reserve.

3. An electric motor according to claim 1 or 2, **characterised in that** the display element comprises a housing (2), which at least in regions is designed in a permeable manner for the foreign matter to be detected, wherein the medium absorbing the foreign matter is arranged in the inside of the housing (2).

4. An electric motor according to one of the preceding claims, **characterised in that** the medium is enclosed by the housing (2) such that it may only expand in a defined direction.

5. An electric motor according to claim 4, **characterised in that** the medium produces a force in the defined direction, for the displacement of the indicator element (10).

6. An electric motor according to claim 4 or 5, **characterised in that** the indicator element (10) is guided in a movable manner in the defined direction.

7. An electric motor according to one of the claims 3 to 6, **characterised in that** the housing (2) is designed in a tubular manner and in particular with a closed end-side (4).

8. An electric motor according to claim 7, **characterised in that** the medium is arranged in the inside of the housing (2) such that it may only expand in the longitudinal direction of the housing (2).

9. An electric motor according to one of the claims 3 to 8, **characterised in that** a window (8) is arranged in the housing (2), preferably at an end-side, through which window an indicator element (10) arranged in the inside of the housing (2) is visible.

10. An electric motor according to claim 9, **characterised in that** the window (8) is arranged in a manner such that the indicator element (10) in a first position is not visible through the window (8), and in a second, displaced position is visible through the window (8).

11. An electric motor according to one of the preceding claims, **characterised in that** a marking or scale is provided, at which at least one certain position of the indicator element (10) may be read off in an unambiguous manner.

12. An electric motor according to one of the preceding claims, **characterised in that** the medium is designed in a water-absorbing manner and changes its volume by way of water absorption.

13. An electric motor according to claim 12, **characterised in that** the medium is oil-repelling.

14. An electric motor according to one of the preceding claims, **characterised in that** an electric sensor element for detecting at least one position of the indicator element (10) is provided.

15. An electric motor according to one of the preceding claims, **characterised in that** the medium is a fluid-absorbing polymer.

16. An electric motor according to one of the preceding claims, **characterised in that** the display element is designed as an exchangeable cartridge.

17. An electric motor according to one of the preceding claims, **characterised in that** the medium at least partly is arranged outside the fluid reserve.

## Revendications

1. Moteur électrique pouvant être immergé dans un fluide, comportant un bain de fluide qui est rendu étanche vis-à-vis du moteur électrique par une première garniture et vis-à-vis du fluide environnant par une seconde garniture, **caractérisé en ce qu'**un élément de visualisation d'une substance étrangère est prévu dans le bain de fluide, qui comprend un milieu recevant la substance étrangère qui est conçu de façon telle que son volume se modifie par la réception de la substance étrangère, et qui comprend un élément indicateur (10) dont la position est déplacée par la modification de volume du milieu.

2. Moteur électrique selon la revendication 1, **caractérisé en ce que** le milieu est conçu de façon telle qu'il ne capte pas le bain de fluide et/ou qu'il est entouré d'une membrane qui est perméable à la substance étrangère et imperméable au bain de fluide.

3. Moteur électrique selon la revendication 1 ou 2, **caractérisé en ce que** l'élément de visualisation présente un boîtier (2) qui est conçu au moins par endroits de façon perméable à la substance étrangère à capter, le milieu captant la substance étrangère étant disposé à l'intérieur du boîtier (2).

4. Moteur électrique selon l'une des revendications précédentes, **caractérisé en ce que** le milieu est enfermé dans le boîtier (2) de façon telle qu'il ne peut s'étendre que dans une direction définie.

5. Moteur électrique selon la revendication 4, **caractérisé en ce que** le milieu génère dans la direction définie une force permettant de déplacer l'élément indicateur (10).

6. Moteur électrique selon la revendication 4 ou 5, **caractérisé en ce que** l'élément indicateur (10) est guidé de façon mobile dans la direction définie.

7. Moteur électrique selon l'une des revendications 3 à 6, **caractérisé en ce que** le boîtier (2) est conçu en forme de tube et en particulier avec une face avant (4) fermée.

8. Moteur électrique selon la revendication 7, **caractérisé en ce que** le milieu est disposé à l'intérieur du boîtier (2) de façon telle qu'il ne peut s'étendre que dans la direction longitudinale du boîtier (2).

9. Moteur électrique selon l'une des revendications 3 à 8, **caractérisé en ce qu'**est disposée dans le boîtier (2), en particulier au niveau de sa face avant, une fenêtre (8) par laquelle un élément indicateur (10) disposé à l'intérieur du boîtier (2) est visible.

10. Moteur électrique selon la revendication 9, **caractérisé en ce que** la fenêtre (8) est disposée de façon telle que l'élément indicateur (10) n'est pas visible par la fenêtre (8) dans une première position et qu'il est visible par la fenêtre (8) dans une seconde position déplacée.

11. Moteur électrique selon l'une des revendications précédentes, **caractérisé en ce qu'**est prévue une marque ou une échelle au niveau de laquelle au moins une position déterminée de l'élément indicateur (10) peut être lue de façon univoque.

12. Moteur électrique selon l'une des revendications précédentes, **caractérisé en ce que** le milieu est conçu pour absorber l'eau et **en ce que** son volume se modifie par l'absorption d'eau.

13. Moteur électrique selon la revendication 12, **caractérisé en ce que** le milieu est oléorésistant.

14. Moteur électrique selon l'une des revendications précédentes, **caractérisé en ce qu'**un élément électrique de détection est prévu pour détecter au moins une position de l'élément indicateur (10).

15. Moteur électrique selon l'une des revendications précédentes, **caractérisé en ce que** le milieu est un polymère qui absorbe un fluide.

16. Moteur électrique selon l'une des revendications précédentes, **caractérisé en ce que** l'élément indicateur se présente sous la forme d'une cartouche remplaçable.

17. Moteur électrique selon l'une des revendications précédentes, **caractérisé en ce que** le milieu est disposé au moins partiellement en-dehors du bain de fluide.
